# EUROPÄISCHE PATENTSCHRIFT

(11) **EP 3 027 100 B1**
(45) Veröffentlichungstag und Bekanntmachung des Hinweises auf die Patenterteilung: **04.04.2018**
(21) Anmeldenummer: 14744463.2
(22) Anmeldetag: 24.07.2014
(51) Int. Cl.: E03C 1/18, A47L 19/02, B29C 70/54, B29K 105/10

(54) **BECKENFORMTEIL, WIE BEISPIELSWEISE EINE KÜCHENSPÜLE, EIN WASCHBECKEN ODER DERGLEICHEN, SOWIE VERFAHREN ZUM HERSTELLEN EINES SOLCHEN BECKENFORMTEILS**
BASIN MOULDING, FOR EXAMPLE A KITCHEN SINK, A WASHBASIN OR THE LIKE, AND METHOD FOR PRODUCING SUCH A BASIN MOULDING
PIÈCE MOULÉE EN FORME D'ÉVIER (1), COMME PAR EXEMPLE UN ÉVIER DE CUISINE, UN LAVABO OU ANALOGUE ET PROCÉDÉ DE FABRICATION D'UNE TELLE PIÈCE MOULÉE EN FORME D'ÉVIER

(30) Priorität: 29.07.2013 DE 102013012867
(43) Veröffentlichungstag der Anmeldung: 08.06.2016
(73) Patentinhaber: Schock GmbH, 94209 Regen (DE)
(72) Erfinder: PATERNOSTER, Rudolf, 94269 Rinchnach (DE); PLEDL, Xaver, 94227 Zwiesel (DE)
(74) Vertreter: Bartels und Partner, Patentanwälte
(86) Internationale Anmeldenummer: PCT/EP2014/002024
(87) Internationale Veröffentlichungsnummer: WO 2015/014462

(56) Entgegenhaltungen:
- EP-A1- 0 016 248
- EP-A1- 2 138 530
- WO-A1-97/10945
- DE-U1-202006 008 913
- DE-U1-202012 102 782
- JP-A- 2012 040 763

## Beschreibung

wie beispielsweise eine Küchenspüle, ein Waschbecken oder dergleichen, sowie Verfahren zum Herstellen eines solchen Beckenformteils Die Erfindung betrifft ein Beckenformteil, wie beispielsweise eine Küchenspüle, ein Waschbecken oder dergleichen, mit den Merkmalen von Anspruch 1 sowie ein Verfahren zum Herstellen eines solchen Beckenformteils mit den Merkmalen von Anspruch 10.

Aus der DE 10 2004 055 365 A1 ist ein Beckenformteil mit den Merkmalen des Oberbegriffs des Patentanspruchs 1 bekannt. Aus der EP 0 361 101 B1 ist ein zugehöriges Herstellverfahren unter Verwendung eines beispielsweise für Küchenspülen geeigneten Formenteils bekannt. Derart hergestellte Beckenformteile weisen eine hohe optische Qualität auf sowie sehr gute Gebrauchseigenschaften, insbesondere eine hohe Abriebfestigkeit und eine hohe Langzeitstabilität des optischen Erscheinungsbildes. Durch die Verwendung geeigneter Bindemittel und darin eingelagerter Füllstoffe für den Kompositwerkstoff kann in hoher Qualität beispielsweise das Erscheinungsbild von Naturstein nachgebildet werden bei gleichzeitig verbesserten Gebrauchseigenschaften des Beckenformteils.

Insbesondere großvolumige und/oder von einer Flächenform abweichende, dreidimensional sich erstreckende Beckenformteile, wie beispielsweise eine Küchenspüle, weisen eine Masse von beispielsweise mehr als 10 kg auf. Dadurch müssen insbesondere beim Transport, aber auch bei der Montage der Beckenformteile Vorkehrungen für eine Bruchsicherung getroffen werden, was einen entsprechenden Aufwand erfordert und die Handhabung erschwert.

Die DE 20 2012 102 782 U1 beschreibt ein Beckenformteil, wie beispielsweise eine Küchenspüle, ein Waschbecken oder dergleichen, aus einem ein polymerisiertes ausgehärtetes Bindemittel und darin eingelagerte Füllstoffe aufweisenden Kompositwerkstoff, wobei das Beckenformteil eine Sichtseite und eine der Sichtseite gegenüberliegende Rückseite aufweist, wobei unidirektional ausgerichtete Fasern nahe der Oberfläche der Rückseite des Beckenformteils in den Kompositwerkstoff einpolymerisiert sind.

Die DE 20 2006 008 913 U1 beschreibt ein weiteres Beckenformteil.

Faserverstärkte Kunststoffe gehen aus der EP 0 016 248 A1, der EP 2 138 530 A1 und der JP 2012-040763 A hervor.

Der Erfindung liegt daher die Aufgabe zugrunde, ein Beckenformteil sowie ein zugehöriges Herstellverfahren bereitzustellen, durch welche die Bruchsicherheit der Beckenformteile, insbesondere beim Transport und/oder der Montage, verbessert ist und der zugehörige Aufwand reduziert ist.

Die Aufgabe ist durch das im Anspruch 1 bestimmte Beckenformteil sowie durch das im nebengeordneten Anspruch bestimmte Herstellverfahren gelöst. Weitere Ausführungsarten der Erfindung sind in den Unteransprüchen bestimmt.

Gemäß dem Kennzeichen von Anspruch 1 ist vorgesehen, dass die nahe der Oberfläche der Rückseite des Beckenformteils unidirektional ausgerichteten und in den Kompositwerkstoff einpolymerisierten Fasern auf weniger als 30 % der Fläche der Rückseite des Beckenformteils angeordnet sind, dass die Fasern mindestens einen Gewebestreifen bilden und dass der Gewebestreifen zwar nahe der Rückseite des Beckenformteils angeordnet, aber zur Oberfläche der Rückseite hin von einer Schicht ausgehärteten Bindemittels abgedeckt ist.

Eine relativ einfache Möglichkeit zur Erhöhung der Bruchsicherheit bestünde in einer Reduzierung des Masseanteils der in das ausgehärtete Bindemittel eingelagerten Füllstoffe, durch die einerseits das Gewicht der Beckenformteile reduziert werden könnte und andererseits das Beckenformteil eine höhere Elastizität aufweisen würde. Allerdings wären dadurch auch die Gebrauchseigenschaften des Beckenformteils verschlechtert, so dass es sich dabei nicht um eine optimale Lösung der Aufgabe handelt.

In der DE 10 2009 025 225 A1 wird vorgeschlagen, die Widerstandsfähigkeit gegenüber Schlag- und Stoßbelastungen aufgrund der durch den hohen Füllstoffgehalt bedingten relativen Sprödigkeit des Kompositwerkstoffes durch eine Zugabe von Keratinfasern zu verbessern, wobei es als wesentlich für das Erzielen einer Verbesserung herausgestellt ist, dass die Fasern gleichmäßig in dem Formkörper verteilt sind und eine Länge von maximal 10 mm aufweisen.

Es ist ein Beckenformteil vorgesehen, wie beispielsweise eine Küchenspüle, ein Waschbecken oder dergleichen, das aus einem ein polymerisiertes ausgehärtetes Bindemittel und darin eingelagerte Füllstoffe aufweisenden Kompositwerkstoff hergestellt ist, wobei das Beckenformteil eine Sichtseite und eine der Sichtseite gegenüberliegende Rückseite aufweist; an oder nahe der Oberfläche der Rückseite des Beckenformteils sind unidirektional ausgerichtete Fasern in den Kompositwerkstoff einpolymerisiert.

Die unidirektionale Ausrichtung der Fasern bedeutet, dass die entsprechenden Fasern mindestens abschnittsweise im Wesentlichen in einer vorgegebenen Richtung ausgerichtet sind, wobei die Fasern auch mehrere, insbesondere zwei oder auch drei Abschnitte aufweisen können, in denen sie in unterschiedlichen Richtungen ausgerichtet sind, beispielsweise weil sie der Kontur des Beckenformteils folgen, das beispielsweise ein oder zwei Becken aufweisen kann. In diesem Fall können die unidirektional ausgerichteten Fasern insgesamt L-förmig (bei einem Becken) oder U-förmig (bei zwei Becken) sein. Alternativ hierzu können die unidirektional ausgerichteten Fasern auch über ihre gesamte Länge im Wesentlichen geradlinig verlaufen, beispielsweise auch im Bereich des Beckens oder der Becken, indem die Fasern beispielsweise außen am Beckenrand vorbei auf einem das Becken umsäumenden Rand des Beckenformteils einpolymerisiert sind.

Der geradlinige Abschnitt der unidirektional ausgerichteten Fasern kann entweder mehr als 50 mm, mehr als 100 mm oder mehr als 150 mm betragen. Die unidirektional ausgerichteten Fasern können beispielsweise mindestens abschnittsweise parallel zu einer Längsseite des Beckenformteils ausgerichtet sein. Die unidirektional ausgerichteten Fasern sind geordnet parallel zueinander verlaufend. In Verbindung mit dem Einpolymerisieren der Fasern in den Kompositwerkstoff insbesondere bereits während der Herstellung des Beckenformteils ist mit einem geringen zusätzlichen Aufwand eine deutliche Verbesserung der Bruchempfindlichkeit erreicht.

Die Fasern weisen dabei eine vergleichsweise große Länge auf und sind beispielsweise als Faserbündel oder Rovings aus Filamenten oder Endlosfasern gebildet, wobei die einpolymerisierten Fasern beispielsweise eine Länge von mehr als 10 cm, insbesondere mehr als 20 cm, aufweisen.

Die unidirektional ausgerichteten Fasern, die als Verstärkungsfasern dienen, können aus einem anorganischen Werkstoff bestehen, insbesondere kann es sich um Glasfasern handeln, beispielsweise um Fasern aus einem sogenannten E-Glas. Alternativ oder ergänzend können auch Fasern aus anderen Werkstoffen eingesetzt werden, beispielsweise aus Polymerkunststoffen, Carbon oder Graphit, gegebenenfalls auch in Kombination untereinander und/oder zusammen mit Glasfasern. Über das gesamte Beckenformteil betrachtet sind die unidirektional ausgerichteten Fasern stark inhomogen in dem Beckenformteil angeordnet, insbesondere sind die an oder nahe der Oberfläche der Rückseite des Beckenformteils unidirektional ausgerichteten Fasern entweder in weniger als 5 % oder in weniger als 3 % des Volumens des Beckenformteils angeordnet.

Das Einpolymerisieren der unidirektional ausgerichteten Fasern kann beim Aushärten des Bindemittels, d.h. beim Herstellen des Beckenformteils, erfolgen. Untersuchungen haben ergeben, dass durch ein derartiges Einpolymerisieren beim Herstellvorgang des Beckenformteils die Bruchfestigkeit höher ist als bei einem nachträglichen Auflaminieren von unidirektional ausgerichteten Fasern auf die Oberfläche des Beckenformteils.

Ein weiterer positiver Effekt der unidirektional ausgerichteten und an oder nahe der Oberfläche der Rückseite des Beckenformteils einpolymerisierten Fasern besteht darin, dass eine Krümmung der Beckenformteile durch die auf der Rückseite einpolymerisierten Fasern nahezu vollständig kompensiert werden kann. Eine solche Krümmung kann dadurch auftreten, dass auf der Sichtseite des Beckenformteils eine Anreicherung der Füllstoffe des Kompositwerkstoffes erfolgt, weil dadurch die Gebrauchseigenschaften des Beckenformteils verbessert sind. Durch die Anreicherung der Füllstoffe auf der Sichtseite kommt es in der Regel zu einer konvexen Auswölbung der Sichtseite, insbesondere beispielsweise im Abschnitt einer Abtropffläche einer Küchenspüle, die zwar beim Einbau des Beckenformteils, beispielsweise beim Einbau einer Küchenspüle in eine Arbeitsplatte, ausgeglichen werden kann, die aber grundsätzlich unerwünscht ist. Durch das Einpolymerisieren der unidirektional ausgerichteten und vorzugsweise verhältnismäßig langen Fasern auf der Rückseite kann diese konvexe Wölbung reduziert oder sogar vollständig kompensiert werden.

Der Anteil des Bindemittels beträgt entweder zwischen 10 und 45 Gew.-%, zwischen 15 und 40 Gew.-% oder zwischen 20 und 35 Gew.-%, jeweils bezogen auf die Summe der Masse des Bindemittels, der Füllstoffe sowie verschiedener Zuschlagstoffe wie Vernetzer, Peroxide oder Trennmittel. Das Bindemittel weist mindestens ein Monomer und mindestens ein Polymer auf. Als Monomere können insbesondere Styrol, Acrylsäure oder Methacrylsäure bzw. deren Ester verwendet werden. In einer besonderen Ausführungsart weist das Bindemittel eine Mischung aus Methylmethacrylat und Polymethylmethacrylat auf, wobei das Polymethylmethacrylat ein Copolymer mit den Bestandteilen Ethylmetacrylat, Butylmetacrylat, oder dergleichen sein kann.

Das Verhältnis der Gewichtsanteile von Polymer zu Monomer in dem Bindemittel beträgt dabei entweder zwischen 1:1 und 1:10, zwischen 1:2 und 1:7 oder zwischen 1:3 und 1:5. Grundsätzlich sind dabei insbesondere die Partikelgröße der verwendeten Füllstoffpartikel und der erforderliche Anteil des Bindemittels in Wechselwirkung miteinander, dahingehend, dass tendenziell bei einer Erhöhung des Anteils gröbere Füllstoffpartikel der Anteil des Bindemittels reduziert werden kann.

Der Anteil des vorzugsweise partikelförmigen und/oder anorganischen Füllstoffs kann entweder zwischen 55 und 85 Gew.-%, zwischen 60 und 80 Gew.-% oder zwischen 65 und 75 Gew.-% betragen, jeweils bezogen auf die Gesamtmasse aus Bindemittel, Füllstoffen und Zuschlagmittel. Bei dem Füllstoff handelt es sich vorzugsweise um einen mineralischen anorganischen Füllstoff, insbesondere einen kristallinen Füllstoff wie beispielsweise Quarzsand.

Vorzugsweise weist der Füllstoff eine Mohshärte von entweder mehr als 5, mehr als 6 oder etwa 7 auf. Dies gilt jedenfalls für den überwiegenden Anteil der verwendeten Füllstoffpartikel. Aus technischen wie ökonomischen Gründen ist die Verwendung von Siliciumdioxid mit einer Mohshärte von etwa 7 bevorzugt. Alternativ oder ergänzend können auch andere und insbesondere noch härtere Füllstoffpartikel eingesetzt werden, die natürlich oder synthetisch gewonnen werden können.

In einer Ausführungsart der Erfindung ist der Kompositwerkstoff abgesehen von Fasern an oder nahe der Oberfläche der Rückseite des Beckenformteils frei von unidirektional ausgerichteten Fasern oder sogar ansonsten vollkommen faserfrei. Insbesondere können die bisher entwickelten Rezepturen der Kompositwerkstoffe auch für erfindungsgemäße Beckenformteile unverändert übernommen werden.

In einer Ausführungsart sind entweder mehr als 50 Gew.-%, mehr als 70 Gew.-% oder sogar mehr als 80 Gew.-% der an oder nahe der Oberfläche der Rückseite des Beckenformteils einpolymerisierten Fasern mindestens abschnittsweise in einer ersten Richtung unidirektional ausgerichtet. Die Ausrichtung dieses Anteils der Fasern kann mindestens abschnittsweise parallel zu einem Längsrand des Beckenformteils verlaufen.

Entweder verlaufen mehr als 80 %, mehr als 90 % oder sogar im Wesentlichen alle sonstigen Fasern schräg und insbesondere quer zur ersten Richtung. Auch diese sonstigen Fasern können daher unidirektional ausgerichtet sein.

Im Falle eines Gewebes können beispielsweise die Kettfäden gegenüber den Schussfäden in der Überzahl sein und mindestens abschnittsweise in der ersten Richtung unidirektional ausgerichtet sein. Beispielsweise kann die Kette eines solchen Fasergewebes durch eine höhere Anzahl der Fasern oder der Faserbündel bzw. Rovings pro cm gebildet sein als der Schuss. Alternativ oder ergänzend kann das Fadengewicht der Kette ein Vielfaches des Fadengewichts des Schusses betragen, und/oder der Werkstoff des Kettfadens kann beispielsweise durch ein anorganisches Glas gebildet sein, beispielsweise aus einem sogenannten E-Glas, wohingegen der Schussfaden aus einem organischen Werkstoff gebildet sein kann, beispielsweise aus einem Polyester.

In einer Ausführungsart sind die an oder nahe der Oberfläche der Rückseite des Beckenformteils unidirektional ausgerichteten und in den Kompositwerkstoff einpolymerisierten Fasern entweder auf weniger als 20 % oder auf weniger als 10 % der Fläche der Rückseite des Beckenformteils angeordnet. Dadurch können die Verstärkungsfasern gezielt nur dort eingesetzt werden, wo dies für das Erreichen des gewünschten Zieles, insbesondere die Erhöhung der Bruchfestigkeit aber auch die Kompensation einer Krümmung des Beckenformteils, besonders wirksam ist.

In einer Ausführungsart sind die an oder nahe der Oberfläche der Rückseite des Beckenformteils unidirektional ausgerichteten Fasern in Form mindestens eines Streifens in den Kompositwerkstoff einpolymerisiert. Es können auch zwei, vorzugsweise nahe den Längsrändern des Beckenformteils verlaufende, oder mehrere Streifen einpolymerisiert sein, die vorzugsweise parallel zueinander ausgerichtet sind. Alternativ oder ergänzend zu einem Streifen können die unidirektional ausgerichteten Fasern auch in Form mindestens eines Flickens mit rechteckförmigem, quadratischem, polygonalem oder mindestens abschnittsweise gekrümmtem Umfang einpolymerisiert sein.

Das Verhältnis von Länge zu Breite des Streifens kann entweder mehr als 3:1, mehr als 5:1 oder mehr als 7:1 betragen. Die Länge der Streifen kann entweder mehr als 150 mm, mehr als 200 mm oder mehr als 250 mm betragen. Die Breite der Streifen kann entweder mehr als 15 mm, mehr als 20 mm und oder als 25 mm betragen. Die Dicke der Streifen kann entweder weniger als 1,2 mm, weniger als 0,9 mm oder vorzugsweise weniger als 0,6 mm betragen. Dadurch kann mit einem relativ geringen Materialeinsatz der Fasern die gewünschte Wirkung erreicht werden.

In einer Ausführungsart erstrecken sich die an oder nahe der Oberfläche der Rückseite des Beckenformteils unidirektional ausgerichteten und in den Kompositwerkstoff einpolymerisierten Fasern sowohl im Abschnitt einer Wand eines Beckens des Beckenformteils als auch in einem sich an das Becken anschließenden weiteren Abschnitt des Beckenformteils. Damit erstrecken sich die Fasern vorzugsweise unterbrechungsfrei in zwei oder mehreren Abschnitten jeweils unidirektional und parallel zueinander, wobei die Ausrichtung in den unterschiedlichen Abschnitten verschieden ist. Durch die Erstreckung der ausgerichteten Fasern sowohl im Wandabschnitt des Beckens als auch in dem an das Becken anschließenden weiteren Abschnitt ist eine besonders wirksame Stabilisierung des Beckenformteils und damit eine Erhöhung der Bruchsicherheit erreicht. Vorzugsweise sind Fasern in Form von zwei oder mehr parallel zueinander verlaufenden und voneinander beabstandeten Streifen in entsprechender Weise einpolymerisiert.

In einer Ausführungsart beträgt der Abstand der an oder nahe der Oberfläche der Rückseite des Beckenformteils unidirektional ausgerichteten und in den Kompositwerkstoff einpolymerisierten Fasern von der Oberfläche der Rückseite des Beckenformteils entweder weniger als 40 %, weniger als 30 % oder weniger als 20 % der Dicke des Beckenformteils in dem die Fasern aufweisenden Abschnitt. Der Abstand kann beispielsweise bei einem Beckenformteil mit einer Dicke entweder zwischen 7 und 12 mm, weniger als 4 mm, weniger als 3 mm oder weniger als 2 mm betragen. Dadurch erfolgt die Stabilisierung durch die Fasern an einer besonders geeigneten Position innerhalb des Beckenformteils.

In einer Ausführungsart beträgt der Masseanteil der an oder nahe der Oberfläche der Rückseite des Beckenformteils unidirektional ausgerichteten und in den Kompositwerkstoff einpolymerisierten Fasern an der Gesamtmasse des Beckenformteils entweder weniger als 1,2 %, weniger als 0,6 % oder weniger als 0,2 %. Untersuchungen haben beispielsweise ergeben, dass bereits durch einen Anteil von 0,05 % bis 0,09 % der entsprechenden Fasern an der Gesamtmasse des Beckenformteils eine Erhöhung der Bruchfestigkeit von mehr als 50 % erreicht werden kann.

Die Erfindung betrifft auch ein Verfahren zum Herstellen eines Beckenformteils, wie beispielsweise eine Küchenspüle, ein Waschbecken oder dergleichen, aus einem ein polymerisiertes Bindemittel und darin eingelagerte Füllstoffe aufweisenden Kompositwerkstoff, wobei das Beckenformteil eine Sichtseite und eine der Sichtseite gegenüberliegende Rückseite aufweist, und bei dem Verfahren an oder nahe der Oberfläche der Rückseite des Beckenformteils mindestens abschnittsweise unidirektional ausgerichtete Fasern in den Kompositwerkstoff einpolymerisiert werden, wobei die nahe der Oberfläche der Rückseite des Beckenformteils unidirektional ausgerichteten und in den Kompositwerkstoff einpolymerisierten Fasern auf weniger als 30 % der Fläche der Rückseite des Beckenformteils angeordnet werden, wobei die Fasern Gewebestreifen bilden und wobei die Gewebestreifen zwar nahe der Rückseite des Beckenformteils angeordnet wird, aber zur Oberfläche der Rückseite hin von einer Schicht ausgehärteten Bindemittels abgedeckt wird. Das Einpolymerisieren erfolgt dabei vorzugsweise während des Aushärtens des Bindemittels zum Herstellen des Beckenformteils.

In einer Ausführungsart wird das Beckenformteil durch Abformen eines Formenteils oder Gießformen hergestellt beispielsweise durch Befüllen eines durch ein oder mehrere Formenteile begrenzten Hohlraumes mit dem die partikelförmigen Füllstoffe aufweisenden, noch flüssigen Bindemittel. Beim Befüllen des Formenteils, insbesondere bei einer Druckbeaufschlagung mindestens eines der Formenteile, kommt es zu einem Durchtränken oder Imprägnieren der beispielsweise als Gewebestreifen in das Formenteil eingelegten unidirektional ausgerichteten Fasern.

In einer Ausführungsart werden vor dem Befüllen des Formenteils mit dem die partikelförmigen Füllstoffe aufweisenden Bindemittel die Fasern an dem Formenteil angeordnet und vor dem Polymerisieren des Bindemittels von dem Bindemittel durchtränkt. Beispielsweise werden die Fasern an einem die Rückseite des Beckenformteils bildenden Formenteilabschnitts angeordnet.

Die Anordnung der Fasern an dem Formenteil kann beispielsweise durch ein Befestigungsmittel vorgenommen werden, das sich beim Polymerisieren des Bindemittels mindestens teilweise auflöst. Die Befestigung kann beispielsweise mittels eines Klebstreifens erfolgen, wobei sich die Klebeschicht beim Polymerisieren des Bindemittels auflösen kann. Die Befestigung der Fasern an dem Formenteil erfolgt vorzugsweise nicht ganzflächig, sondern nur abschnittsweise, wodurch ein Durchtränken der Fasern mit dem noch flüssigen Bindemittel verbessert ist.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine perspektivische Ansicht auf die Rückseite eines erfindungsgemäßen Beckenformteils;
- Fig. 2: zeigt einen Schnitt entlang II-II durch das Beckenformteil 1 der Fig. 1 während des Herstellvorgangs;
- Fig. 3: zeigt einen Schnitt entlang II-II durch das Beckenformteil 1 der Fig. 1 nach dem Herstellvorgang;
- Fig. 4: zeigt einen schematisierten Längsschnitt durch ein Beckenformteil nach dem Stand der Technik; und
- Fig. 5: zeigt einen schematisierten Längsschnitt durch ein weiteres Ausführungsbeispiel eines erfindungsgemäßen Beckenformteils.

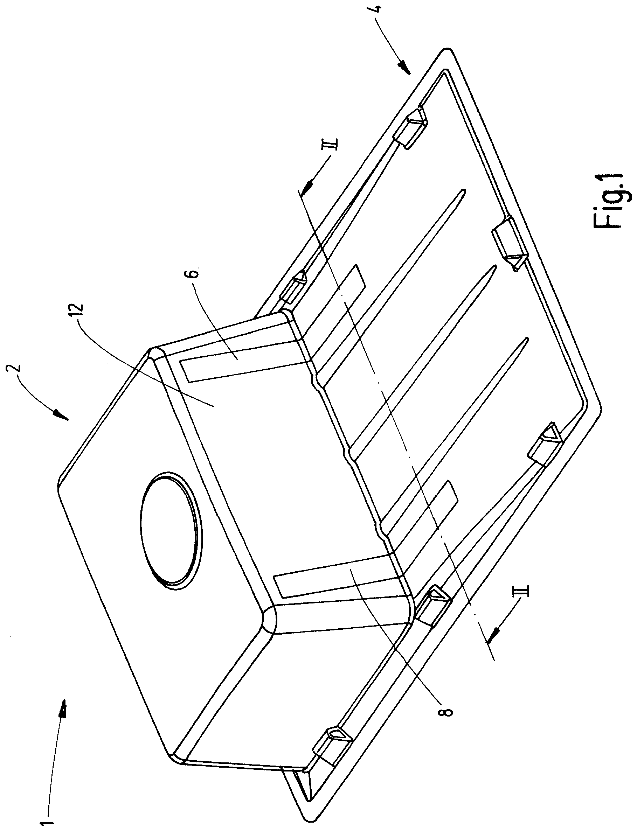

Die Fig. 1 zeigt eine perspektivische Ansicht auf die Rückseite eines erfindungsgemäßen Beckenformteils, bei dem es sich um eine Küchenspüle handelt.

Das Beckenformteil 1 weist einen Abschnitt mit einem Becken 2 sowie einem daran anschließenden weiteren Abschnitt 4 auf, der auf der in der Fig. 1 nicht dargestellten Sichtseite des Beckenformteils 1 eine Abtropffläche bildet. Das Beckenformteil 1 ist aus einem Kompositwerkstoff hergestellt, der im noch nicht polymerisierten flüssigen Zustand eine Bindemittellösung aus Polymethylmethacrylat in Methylmethacrylat aufweist mit einem Anteil von 22 bis 32 Gew.-%, bezogen auf die gesamte aushärtbare Masse. Der Anteil des Polymethylmethacrylats an dieser Bindemittellösung beträgt zwischen 18 und 25 Gew.-%. In dieser Bindemittellösung sind neben einigen Zuschlagstoffen wie beispielsweise einem peroxydischen Katalysator, einem Haftvermittler und/oder einem Quervernetzungsmittel, noch 67 bis 78 Gew.-% von vorzugsweise anorganischen partikelförmigen Füllstoffen eingelagert, beispielsweise von kristallinem Quarzsand. Von den Füllstoffen können beispielsweise 70 bis 85 Gew.-% eine Größe zwischen 0,1 mm und 0,4 mm aufweisen.

In einer alternativen Ausführungsform kann der Anteil der Füllstoffe zwischen 67 und 70 Gew.-% betragen und die Partikelgröße eines beispielsweise aus Quarzsand gebildeten Füllstoffes kann, jedenfalls von mehr als 90 Gew.-% der Füllstoffpartikel, zwischen 0,05 mm bis 0,3 mm betragen. Der Anteil des Quervernetzers kann dabei mehr als 20 Gew.-% und weniger als 32 Gew.-% betragen, bezogen auf den Masseanteil des Monomers in der Bindemittellösung, der beispielsweise zwischen 70 Gew.-% und 80 Gew.-% betragen kann.

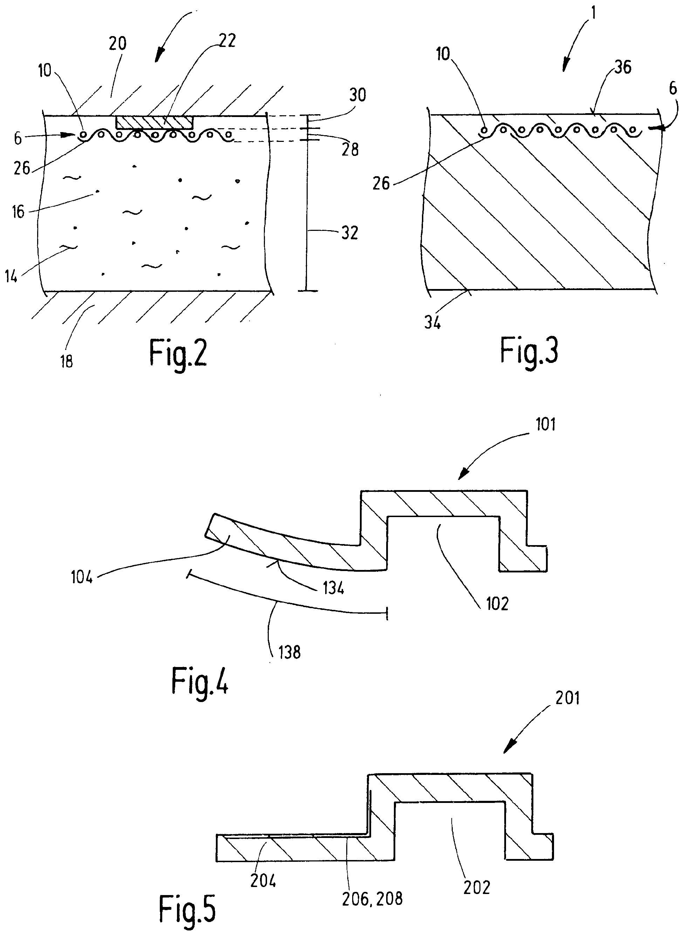

Im dargestellten Ausführungsbeispiel sind unidirektional ausgerichtete Fasern 10 (Fig. 3) in Form von zwei Gewebestreifen 6, 8 knapp unterhalb der Oberfläche der Rückseite 36 des Beckenformteils 1 angeordnet. Beide Gewebestreifen 6, 8 sind aus einem unidirektionalen Glasfasergewebe mit einer Breite von etwa 30 mm und einer Länge von insgesamt etwa 300 mm bei einer Dicke von etwa 0,4 mm gebildet. Das Flächengewicht beträgt etwa 450 g/m². Die in Längsrichtung der Gewebestreifen 6, 8 verlaufende und durch die unidirektional ausgerichteten Fasern 10 gebildete Kette ist im Ausführungsbeispiel durch vier Faserbündel oder Rovings pro cm mit einem Fadengewicht von 1.200 tex (1.200 g pro 1.000 m) gebildet, wobei die Kettfäden aus einem sogenannten E-Glas hergestellt sind. Der quer zur Längsrichtung der Gewebestreifen 6, 8 verlaufende Schuss 26 ist dagegen durch 1,8 Fäden pro cm gebildet und weist einem Fadengewicht von 28 tex auf, wobei die Schussfäden 26 beispielsweise aus Polyester hergestellt sind.

Die Gewebestreifen 6, 8 verlaufen abschnittsweise parallel zueinander und sind am Übergang von einer Seitenwand 12 des Beckens 2 zu der Rückseite eines die Abtropffläche bildenden weiteren Abschnitts 4 angeordnet. Die beiden Gewebestreifen 6, 8 weisen dabei einen Abstand zueinander auf, der mehr als 60 %, insbesondere mehr als 70 % und vorzugsweise mehr als 75 % der Erstreckung der Seitenwand 12 beträgt, so dass die beiden Gewebestreifen 6, 8 nahe dem äußeren Rand der Seitenwand angeordnet sind.

Die Fig. 2 zeigt einen Schnitt entlang II-II durch den weiteren Abschnitt 4 des Beckenformteils 1 der Fig. 1 im Bereich eines Gewebestreifens 6 während des Herstellvorgangs und noch vor dem Aushärten des Bindemittels 14. Das Formenteil weist ein unteres Formenteil 18 auf, durch das beim Abformen die Sichtseite des Beckenformteils 1 gebildet wird, sowie ein oberes Formenteil 20, durch das beim Abformen die Rückseite des Beckenformteils 1 gebildet wird. Mittels eines Klebestreifens 22 wird vor dem Befüllen des Formenteils mit dem Bindemittel 14 der Gewebestreifen 6 an dem oberen Formenteil 20 angeordnet, wobei die Breite des Klebestreifens 22 weniger als 75 %, insbesondere weniger als 60 %, der Breite des Gewebestreifens 6 beträgt, so dass der Gewebestreifen 6 vorzugsweise auf beiden Seiten über den Klebestreifen 22 hinausragt, wodurch das Durchtränken des Gewebestreifens 6 mit dem Bindemittel 16 verbessert ist.

Der Gewebestreifen 6 ist durch die senkrecht zur Zeichenebene der Fig. 2 verlaufenden Kettfäden oder Kettrovings gebildet, welche auch die erfindungsgemäß unidirektional ausgerichteten Fasern 10 bilden und aus E-Glas hergestellt sind. Quer hierzu verlaufen in der Zeichenebene der Fig. 2 die Schussfäden 26, die beispielsweise aus einem Kunststoff wie Polyester bestehen und deren Fadengewicht weniger als 20 % des Fadengewichts der Kettfäden beträgt, insbesondere weniger als 10 % und vorzugsweise weniger als 5 %. Die Fadenbindung des Gewebestreifens 6 ist in der Fig. 2 nur schematisch dargestellt, andere Fadenbindungen sind ebenso möglich wie eine Mehrlagigkeit des Gewebes oder die Verwendung eines Geleges oder Gewirkes anstelle eines Gewebes.

Die Dicke 28 des Gewebestreifens 6 beträgt im Ausführungsbeispiel etwa 0,4 mm. Die Dicke 30 des Klebestreifens 22 kann beispielsweise zwischen 0,01 mm und 0,5 mm betragen, insbesondere zwischen 0,05 mm und 0,2 mm. Der Abstand 32 des Gewebestreifens 6 von dem unteren Formenteil 18, mithin von der die Sichtseite 34 des Beckenformteils 1 kann demgegenüber beispielsweise zwischen 6 und 12 mm betragen.

Die Fig. 3 zeigt einen Ausschnitt des Beckenformteils 1 im Bereich des Gewebestreifens 6 nach dem Aushärten des Bindemittels 14. Der Gewebestreifen 6 ist zwar nahe der Rückseite 36 des Beckenformteils 1 angeordnet, aber zur Oberfläche der Rückseite 36 hin von einer Schicht ausgehärteten Bindemittels 14 abgedeckt.

Die Fig. 4 zeigt einen schematisierten Längsschnitt durch ein Beckenformteil 101, das nicht entsprechend der vorliegenden Erfindung ausgerüstet ist. Insbesondere im Bereich des weiteren Abschnitts 104, dort wiederum insbesondere im Bereich des Abschnitts 138 am Übergang des weiteren Abschnitts 104 zum Becken 102, tritt bei den bekannten Beckenformteilen eine Krümmung auf, die zu der Sichtseite 134 hin konvex gewölbt ist.

Die Fig. 5 zeigt einen schematisierten Längsschnitt durch ein weiteres Ausführungsbeispiel eines erfindungsgemäßen Beckenformteils 201, das aufgrund der im Ausführungsbeispiel durch die im Wesentlichen L-förmig einpolymerisierten Gewebebänder 206, 208 unidirektional ausgerichteten Fasern 10 die Herstellung von im Wesentlichen plan ausgerichteten dreidimensionalen Beckenformteilen 201 ermöglicht und gleichzeitig die Bruchfestigkeit der so hergestellten Formkörper 201 verbessert. Im Unterschied zum Ausführungsbeispiel der Fig. 1 erstreckt sich beim Beckenformteil 201 der Fig. 5 ein Schenkel der einpolymerisierten Fasern 10 über mehr als 40%, insbesondere mehr als 60% und vorzugsweise mehr als 80 % der Länge des weiteren Abschnitts 204.

## Patentansprüche

1. Beckenformteil (1) aus einem ein polymerisiertes ausgehärtetes Bindemittel (14) und darin eingelagerte Füllstoffe (16) aufweisenden Kompositwerkstoff, wobei das Beckenformteil (1) eine Sichtseite (34) und eine der Sichtseite (34) gegenüberliegende Rückseite (36) aufweist, wobei unidirektional ausgerichtete Fasern (10) nahe der Oberfläche der Rückseite (36) des Beckenformteils (1) in den Kompositwerkstoff einpolymerisiert sind, **dadurch gekennzeichnet, dass** die nahe der Oberfläche der Rückseite (36) des Beckenformteils (1) unidirektional ausgerichteten und in den Kompositwerkstoff einpolymerisierten Fasern (10) auf weniger als 30 % der Fläche der Rückseite (36) des Beckenformteils (1) angeordnet sind, dass die Fasern (10) mindestens einen Gewebestreifen (6, 8) bilden und dass der Gewebestreifen (6, 8) zwar nahe der Rückseite (36) des Beckenformteils (1) angeordnet, aber zur Oberfläche der Rückseite (36) hin von einer Schicht ausgehärteten Bindemittels (14) abgedeckt ist.

2. Beckenformteil (1) nach Anspruch 1, **dadurch gekennzeichnet, dass** der Kompositwerkstoff abgesehen von Fasern an oder nahe der Oberfläche der Rückseite (36) des Beckenformteils (1) frei von unidirektional ausgerichteten Fasern (10) ist.

3. Beckenformteil (1) nach einem der vorgenannten Ansprüche, **dadurch gekennzeichnet, dass** entweder mehr als 50 Gew.-%, mehr als 70 Gew.-% oder mehr als 80 Gew.-% der an oder nahe der Oberfläche der Rückseite (36) des Beckenformteils (1) einpolymerisierten Fasern (10) in einer ersten Richtung unidirektional ausgerichtet sind.

4. Beckenformteil (1) nach einem der vorgenannten Ansprüche, **dadurch gekennzeichnet, dass** die an oder nahe der Oberfläche der Rückseite (36) des Beckenformteils (1) unidirektional ausgerichteten und in den Kompositwerkstoff einpolymerisierten Fasern (10) entweder auf weniger als 20 % oder auf weniger als 10 % der Fläche der Rückseite (36) des Beckenformteils (1) angeordnet sind.

5. Beckenformteil (1) nach einem der vorgenannten Ansprüche, **dadurch gekennzeichnet, dass** das Verhältnis von Länge zu Breite der Streifen (6, 8) entweder mehr als 3:1, mehr als 5:1 und oder mehr als 7:1 beträgt.

6. Beckenformteil (1) nach einem der vorgenannten Ansprüche, **dadurch gekennzeichnet, dass** die an oder nahe der Oberfläche der Rückseite (36) des Beckenformteils (1) unidirektional ausgerichteten und in den Kompositwerkstoff einpolymerisierten Fasern (10) sich sowohl im Abschnitt einer Wand (12) eines Beckens (2) des Beckenformteils (1) erstrecken als auch in einem sich an das Becken (2) anschließenden weiteren Abschnitts (4) des Beckenformteils (1) erstrecken.

7. Beckenformteil (1) nach einem der vorgenannten Ansprüche, **dadurch gekennzeichnet, dass** der Abstand (30) der an oder nahe der Oberfläche der Rückseite (36) des Beckenformteils (1) unidirektional ausgerichteten und in den Kompositwerkstoff einpolymerisierten Fasern (10) von der Oberfläche der Rückseite (36) des Beckenformteils (1) entweder weniger als 40 %, weniger als 30 % oder weniger als 20 % der Dicke des Beckenformteils (1) in dem die Fasern (10) aufweisenden Abschnitt beträgt.

8. Beckenformteil (1) nach einem der vorgenannten Ansprüche, **dadurch gekennzeichnet, dass** der Masseanteil der an oder nahe der Oberfläche der Rückseite (36) des Beckenformteils (1) unidirektional ausgerichteten und in den Kompositwerkstoff einpolymerisierten Fasern (10) an der Gesamtmasse des Beckenformteils (1) entweder weniger als 1,2 %, weniger als 0,6 % oder weniger als 0,2 % beträgt.

9. Verfahren zum Herstellen eines Beckenformteils (1) aus einem ein polymerisiertes Bindemittel (14) und darin eingelagerte Füllstoffe (16) aufweisenden Kompositwerkstoff, wobei das Beckenformteil (1) eine Sichtseite (34) und eine der Sichtseite (34) gegenüberliegende Rückseite (36) aufweist, wobei nahe der Oberfläche der Rückseite (36) des Beckenformteils (1) unidirektional ausgerichtete Fasern (10) in den Kompositwerkstoff einpolymerisiert werden, **dadurch gekennzeichnet, dass** die nahe der Oberfläche der Rückseite (36) des Beckenformteils (1) unidirektional ausgerichteten und in den Kompositwerkstoff einpolymerisierten Fasern (10) auf weniger als 30 % der Fläche der Rückseite (36) des Beckenformteils (1) angeordnet werden, dass die Fasern (10) mindestens einen Gewebestreifen (6,8) bilden und dass der Gewebestreifen (6,8) zwar nahe der Rückseite (36) des Beckenformteils (1) angeordnet wird, aber zur Oberfläche der Rückseite (36) hin von einer Schicht ausgehärteten Bindemittels (14) abgedeckt wird.

10. Verfahren nach Anspruch 9, **dadurch gekennzeichnet, dass** das Beckenformteil (1) entweder durch Abformen eines Formenteils (18, 20) oder durch Gießformen hergestellt wird.

11. Verfahren nach Anspruch 10, **dadurch gekennzeichnet, dass** vor dem Befüllen des Formenteils (18, 20) mit dem die partikelförmigen Füllstoffe (16) aufweisenden Bindemittel (14) die Fasern (10) an dem Formenteil (18, 20) angeordnet werden und vor dem Polymerisieren des Bindemittels (14) von dem Bindemittel (14) durchtränkt werden.

## Claims

1. A basin moulding (1) made of a composite material comprising a polymerized, cured binder (14) and fillers (16) incorporated therein, the basin moulding (10) having a visible side (34) and a rear side (36) lying opposite the visible side (34), unidirectionally aligned fibres (10) being polymerized into the composite material in the vicinity of the surface of the rear side (36) of the basin moulding (1), **characterised in that** the fibres (10) unidirectionally aligned in the vicinity of the surface of the rear side (36) of the basin moulding (1) and polymerised into the composite material are arranged over less than 30% of the surface area of the rear side (36) of the basin moulding (1), that the fibres (10) form at least one fabric strip (6, 8) and that the fabric strip (6, 8) is arranged in the vicinity of the rear side (36) of the basin moulding (1), but towards the surface of the rear side (36) is covered by a layer of cured binder (14).

2. The basin moulding (1) according to Claim 1, **characterised in that** with the exception of fibres on or in the vicinity of the surface of the rear side (36) of the basin moulding (1), the composite material is free of unidirectionally aligned fibres (10).

3. The basin moulding (1) according to any of the above-specified claims, **characterised in that** more than 50% by weight, more than 70% by weight or more than 80% by weight of the fibres (10) polymerised in on or in the vicinity of the surface of the rear side (36) of the basin moulding (1) are unidirectionally aligned in a first direction.

4. The basin moulding (1) according to any of the above-specified claims, **characterised in that** the unidirectionally aligned fibres (10) on or in the vicinity of the surface of the rear side (36) of the basin moulding (1) and polymerised into the composite material are arranged either over less than 20% or over less than 10% of the surface area of the rear side (6) of the basin moulding (1).

5. The basin moulding (1) according to any of the above-specified claims, **characterised in that** the length to width ratio of the strips (6, 8) is greater than 3:1, greater than 5:1 and/or greater than 7:1.

6. The basin moulding (1) according to any of the above-specified claims, **characterised in that** the fibres unidirectionally aligned on or in the vicinity of the surface of the rear side (36) of the basin moulding (1) and polymerized into the composite material extend in the portion of a wall (12) of a basin (2) of the basin moulding (1) as well as in another portion (4) of the basin moulding (1) adjoining the basin (2).

7. The basin moulding (1) according to any of the above-specified claims, **characterised in that** the distance (30) of the fibres (10) unidirectionally aligned on or in the vicinity of the surface of the rear side (36) of the basin moulding (1) and polymerized into the composite material from the surface of the rear side (36) of the basin moulding (1) is less than 40%, less than 30% or less than 20% of the thickness of the basin moulding (1) in the portion comprising the fibres (10).

8. The basin moulding (1) according to any of the above-specified claims, **characterised in that** the mass fraction of the fibres (10) unidirectionally aligned on or in the vicinity of the surface of the rear side (36) of the basin moulding (1) and polymerized into the composite material is less than 1.2%, less than 0.6% or less than 0.2% of the total mass of the basin moulding (1).

9. A method for producing a basin moulding (1) from a composite material comprising a polymerised binder (14) and fillers (16) incorporated therein, the basin moulding (1) having a visible side (34) and a rear side (36) lying opposite the visible side (34), unidirectionally aligned fibres (10) being polymerized into the composite material in the vicinity of the surface of the rear side (36) of the basin moulding (1), **characterised in that** the fibres (10) unidirectionally aligned in the vicinity of the surface of the rear side (36) of the basin moulding (1) and polymerized into the composite material are arranged over less than 30% of the surface area of the rear side (36) of the basin moulding (1), that the fibres (10) form at least one fabric strip (6, 8), and that the fabric strip (6, 8) is arranged in the vicinity of the rear side (36) of the basin moulding (1), but is covered by a layer of cured binder (14) towards the surface of the rear side (36).

10. The method according to Claim 9, **characterised in that** the basin moulding (1) is produced either by casting a mould part (18, 20) or by casting moulds.

11. The method according to Claim 10, **characterised in that** before filling the mould part (18, 20) with the binder (14) comprising the particulate fillers (16), the fibres (10) are arranged on the mould part (18, 20) and are saturated with the binder (14) before the polymerisation of the binder (14).

## Revendications

1. Pièce (1) moulée en cuvette en un matériau composite ayant un liant (14) durci polymérisé et des charges (7) qui y sont incorporées, la pièce (1) moulée en cuvette ayant un côté (34) en vue et un côté (36) arrière opposé au côté (34) en vue, des fibres (10), à orientation unidirectionnelle, étant incorporées par polymérisation au matériau composite, près de la surface du côté (36) arrière de la pièce (1) moulée en cuvette, **caractérisée en ce que** les fibres (10), à orientation unidirectionnelle, près de la surface du côté (36) arrière de la pièce (1) moulée en cuvette et incorporées par polymérisation au matériau composite, sont disposées sur moins de 30 % de la surface du côté (36) arrière de la pièce (1) moulée en cuvette, **en ce que** les fibres (10) forment au moins une bande (6, 8) d'étoffe et **en ce que** la bande (6, 8) d'étoffe est disposée certes près du côté (36) arrière de la pièce (1) moulée en cuvette, mais est recouverte vers la surface du côté (36) arrière d'une couche de liant (14) durcie.

2. Pièce (1) moulée en cuvette suivant la revendication 1, **caractérisée en ce que** le matériau composite, abstraction faite de fibres sur ou près de la surface du côté (36) arrière de la pièce (1) moulée en cuvette, est exempt de fibres (10) à orientation unidirectionnelle.

3. Pièce (1) moulée en cuvette suivant l'une des revendications précédentes, **caractérisée en ce que** soit plus de 50 % en poids, plus de 70 % en poids ou plus de 80 % en poids des fibres (10) incorporées par polymérisation sur ou près de la surface du côté (36) arrière de la pièce (1) moulée en cuvette sont orientées unidirectionnellement dans une première direction.

4. Pièce (1) moulée en cuvette suivant l'une des revendications précédentes, **caractérisée en ce que** les fibres (10), à orientation unidirectionnelle, sur ou près de la surface du côté (36) arrière de la pièce (1) moulée en cuvette et incorporées par polymérisation dans un matériau composite, sont disposées soit sur moins de 20 %, soit sur moins de 10 % de la surface du côté (36) arrière de la pièce (1) moulée en cuvette.

5. Pièce (1) moulée en cuvette suivant l'une des revendications précédentes, **caractérisée en ce que** le rapport de la longueur et la largeur de la bande (6, 8) est soit supérieur à 3:1, supérieur à 5:1 1 et soit supérieur 7:1.

6. Pièce (1) moulée en cuvette suivant l'une des revendications précédentes, **caractérisée en ce que** les fibres (10), à orientation unidirectionnelle, sur ou près de la surface (36) du côté (36) arrière de la pièce (1) moulée en cuvette et incorporées par polymérisation au matériau composite, s'étendent tant dans la partie d'une paroi (12) d'une cuvette (12) de la pièce (1) moulée en cuvette, qu'également dans une autre partie (4), se raccordant à la cuvette (2), de la pièce (1) moulée en cuvette.

7. Pièce (1) moulée en cuvette suivant l'une des revendications précédentes, **caractérisée en ce que** la distance (30) des fibres (10), à orientation unidirectionnelle, sur ou près de la surface (36) du côté (36) arrière de la pièce (1) moulée en cuvette et incorporées par polymérisation dans un matériau composite, à la surface du côté (36) arrière de la pièce (1) moulée en cuvette représente soit moins 40 %, moins de 30 %, soit moins de 20 % de l'épaisseur de la pièce moulée en cuvette dans la partie ayant les fibres (10).

8. Pièce (1) moulée en cuvette suivant l'une des revendications précédentes, **caractérisée en ce que** la proportion en masse des fibres (10), à orientation unidirectionnelle, sur ou près de la surface du côté (36) arrière de la pièce (1) moulée en cuvette et incorporées par polymérisation dans le matériau composite, représente, sur la masse totale de la pièce (1) moulée en cuvette, soit moins de 1,2 %, moins de 0,6 %, soit moins de 0,2 %.

9. Procédé de fabrication d'une pièce (1) moulée en cuvette à partir d'un matériau composite ayant un liant (14) polymérisé et des charges (16) qui y sont incorporées, dans lequel la pièce (1) moulée en cuvette a un côté (34) en vue et un côté (36) arrière opposé au côté (34) en vue, dans lequel on incorpore par la polymérisation au matériau composite des fibres (10), à orientation unidirectionnelle, près de la surface du côté (36) arrière de la pièce (1) moulée en cuvette, **caractérisé en ce que** l'on met les fibres (10), à orientation unidirectionnelle, près de la surface du côté (36) arrière de la pièce (1) moulée en cuvette et incorporées par polymérisation au matériau composite sur moins de 30 % de la surface du côté (36) arrière de la pièce (1) moulée en cuvette, **en ce que** les fibres (10)) forment au moins une bande (6, 8) d'étoffe et **en ce que** l'on met la bande (6, 8) d'étoffe certes près du côté (36) arrière de la pièce (1) moulée en cuvette, mais en la recouvrant vers la surface du côté (36) arrière, d'une couche de liant (14) durcie.

10. Procédé suivant la revendication 9, **caractérisé en ce que** l'on produit la pièce (1) moulée en cuvette, soit par moulage d'une pièce (18, 20) moulée, soit par coulée.

11. Procédé suivant la revendication 10, **caractérisé en ce qu'**avant de charger la pièce (18, 20) moulée du liant (14) ayant les charges (7) sous forme de particules, on met les fibres (10) sur la pièce (18, 20) moulée et, avant la polymérisation du liant (14), on les imprègne du liant (14).
